# EUROPEAN PATENT SPECIFICATION

(11) **EP 2 691 550 B1**
(45) Date of publication and mention of the grant of the patent: **24.05.2017**
(21) Application number: 12711575.6
(22) Date of filing: 28.03.2012
(51) Int. Cl.: B32B 15/01, C21D 1/42, C21D 8/02, C22C 38/00, C23C 2/28, C23C 26/00, C21D 9/46

(54) **METHOD OF HEAT TREATING A COATED METAL STRIP AND HEAT TREATED COATED METAL STRIP**
VERFAHREN ZUR LOKALEN WÄRMEBEHANDLUNG EINES BESCHICHTETEN METALLBANDES UND LOKAL WÄRMEBEHANDELTES, BESCHICHTETES METALLBAND
PROCÉDÉ POUR LE TRAITEMENT THERMIQUE LOCAL D'UNE BANDE MÉTALLIQUE REVÊTUE ET BANDE MÉTALLIQUE REVÊTUE THERMOTRAITÉE LOCALEMENT

(30) Priority: 30.03.2011 EP 11002606
(43) Date of publication of application: 05.02.2014
(73) Proprietor: Tata Steel Nederland Technology B.V., 1951 JZ Velsen-Noord (NL)
(72) Inventor: CELOTTO, Steven, NL-1970 CA IJmuiden (NL); KAMP, Arjen, NL-1970 CA IJmuiden (NL)
(74) Representative: Kruit, Jan
(86) International application number: PCT/EP2012/001338
(87) International publication number: WO 2012/130434

(56) References cited:
- WO-A1-2011/016518
- US-A- 4 361 448
- US-A- 5 156 683
- US-A1- 2007 107 819
- M. TUMULURU: "The Effect of Coatings on the ResistanceSpot Welding Behavior of 780 MPaDual-Phase Steel", WELDING JOURNAL, vol. 86, 30 June 2007 (2007-06-30), pages 161-s-169-s, XP002681893, http://files.aws.org/wj/supplement/wj0607- 161.pdf

## Description

The invention relates to a method of heat treating a coated metal strip. The invention also relates to a heat treated coated metal strip.

Usually metal strip material such as steel strip material is subjected to a continuous annealing process after rolling, providing the desired mechanical properties to the strip material. After annealing, the strip material can be coated in order to achieve the desired surface properties to the strip material. E.g. hot dip galvanising in a zinc bath is a well known process to supply corrosion protection and an attractive appearance to the metal strip.

For certain applications, mostly in the automotive industry, there is a need for coated metal strip having tailored mechanical properties in selected sections thereof. In particular, formability and strength requirements may be considered as a set of desired properties contradicting each other. Limited formability is mostly associated with high strength grades, where the ultimate strength (Rm) is 780 MPa or more.

An object of the invention is to meet this need.

Another object is to provide a manufacturing method of coated metal strip having tailored mechanical properties in selected sections thereof.

Yet another object is to provide coated metal strip having selected sections for bending and hole-expansion and other selected sections for strength, deep drawing and stretch forming operations.

According to a first aspect the invention provides a method of heat treating a coated metal strip comprising the step of heat treating the coated metal strip using heat treatment conditions which differ over the width of the coated metal strip, thereby providing mechanical properties that differ over the width of the strip, wherein the coated metal strip is a coated steel strip of dual phase (DP) steel or martensite steel.

In the method according to the invention a temperature treatment is performed on the coated metal strip in a controlled and localized manner. Different treatment conditions, in particular conditions like treatment temperature and time are applied to different sections of the coated metal strip. Heating rate and cooling rate also belong to the treatment factors that may differ. Due to the different treatment conditions the physical and/or mechanical treatments are modified and optimized in selected sections for adapting to further application(s) of the coated metal strip.

The starting material of the present method is a metal strip that has been coated. The metal strip is a steel strip of dual phase (DP) steel strip or martensite steel that has been provided with a coating. Dual phase steel having a high level of ultimate tensile strength, such as 780 MPa and higher like DP800, DP1000 and DP1200, is particularly preferred. Treatment according to the invention of lower strength grades could be superfluous as these grades already have sufficient formability in a subsequent forming operation. Advantageously the coating is a metal coating, preferably a zinc coating because of its galvanic protection and surface appearance. The method according to the invention is performed such that the desired features of the coating are not modified, at least not changed essentially, by subjecting to the heat treatment.

According to a preferred embodiment heat treating according to the invention comprises heating one or more selected regions to be modified of the coated metal strip above a critical temperature, while one or more selected regions not to be modified are maintained below the critical temperature or time at the critical temperature or above. In this embodiment the properties of certain sections of the coated metal strip are modified to achieve features that are locally optimized in view of the intended further application(s), while other sections keep their original properties, such as those obtained upon the usual annealing step of the metal strip prior to coating.The method according to the invention is performed such that the selected regions run parallel to the longitudinal axis of the metal strip. As a result the regions having different properties run over the full length of the metal strip. Usually the coated metal strip is processed according to the invention in a continuous manner. E.g. the coated metal strip is moved through a stationary heating device having localisable heating means. In an embodiment the localised heat treatment according to the invention is performed on the same processing line as the preceding coating operation. Of course, the method according to the invention may also be carried out on a separate dedicated processing line. An appropriate line speed of the moving strip is e.g. 0.5-150 metres per minute in both cases. The width of a region may range from 10 mm to 90 % or more of the width of the coated metal strip.

Zinc coated dual phase steel or martensite steel can be manufactured by conventional continuous annealing processes. E.g. a 0.5-2.5 mm thick cold-rolled strip is heated to a temperature above Ac1. Then the strip thus treated is cooled sufficiently quick to retain a certain fraction of martensite ranging in volume fraction from 5 % to 60 % by volume for DP steel. The remainder of the microstructure comprises ferrite or bainitic ferrite. The cooling step may include an arrest in temperature, also known as overaging stage in the art. Optionally the cooled strip may be slightly re-heated just before coating. Hot dip galvanisation, electrolytic and vapour deposition processes are common coating processes. Once coated the strip is cooled down to room temperature.

For martensite steel the strip is initially heated to above Ac3 and then cooled sufficiently fast to prevent the formation of ferrite, pearlite, bainite and carbides.

The method according to the invention may start if the temperature of the strip to be treated is below 250 °C. Usually ambient temperature will be the starting temperature.

In the invention the heat treatment is not performed over the whole width or length of the strip. For example, there may be one or more heat-treated zones running continuously and parallel to the length of the strip separated by non-heat-treated regions where the strip material retains its original properties. The width of the heat-treated and non-heat-treated regions may range from 10 mm and upwards, e.g. 50 mm. If there are more than one heat-treated regions, the heat-treated regions need not have been subjected to the same treatment conditions, but differences in time and temperature may have been applied. Consequently, the heat-treated zones may have different properties.

The local heat treating according to the invention can be carried out using induction heating. Other suitable examples include electric resistant heating, direct flame and hot gas heating. If necessary the regions not to be modified of the coated metal strip may be cooled actively e.g. using gas, liquid or binary phase fluid. After heat treatment according to the invention the coated metal strip is allowed to cool down to room temperature in an active (forced) way or naturally. Usually there will be a transition area between the unmodified regions and the modified regions. The width of the transition area, e.g. 5-50 mm, is advantageously controlled by active cooling.

In the heat treated region the heat treatment conditions should change the mechanical properties of the bulk of the metal strip, but not affect the coating functionalities. E.g. the appearance and galvanic corrosion protection of a Zn coating should be maintained, at least at the desired level.

Advantageously the region(s) to be modified is/are heated to a treatment temperature ranging from 300 to 450 °C, preferably in the range of 300-420 °C. The processing time is dependent on the processing temperature and ranges from seconds for temperatures above 400°C to several minutes for temperatures ranging between 300 to 400°C. At a temperature below 300 °C the treatment time of the bulk metal in the strip is too long to be practical. At a temperature above 450 °C a Zn coating is affected even at short treatment times (e.g. holding time less than 1 second). For a holding time less than 1 second at 450°C, generally the change in properties of the bulk metal in the strip is insufficient.

As already mentioned, the heating and cooling rate are other factors from which the temperature treatment according to the invention is dependent. These factors are less critical or not critical at all, but usually will be taken into account together with the top temperature for the heat treatment as a whole. In other words, generally slower heating and/or cooling rates (<30°C/s) are used for lower top temperatures, whereas faster rates (>30°C/s) are applied for higher temperatures.

In a preferred embodiment the temperature of the regions not to be modified is kept at most at a temperature of 250°C for less than 10 seconds, more preferably the temperature is below 200°C.

In the heat treatment according to the invention using martensite or DP steel strip provided with a Zn coating, temperature could compensate for time. That means a short heat treatment at a high temperature may be equivalent to a heat treatment at a lower temperature for a longer time. This phenomenon is described in a single parameter that is called the Holloman-Jaffe or Larson-Miller parameter. The value of the parameter (P) is given as P= T*(A+log(t)), T is in Kelvin, t is in hours and the constant A is generally 22 plus or minus 2. This parameter is applied in such a way that it takes into account the ramp up in temperature and the cooling down part of the heat treatment.

In a preferred example using a coated metal strip made of DP steel heat treating the selected regions to be modified is carried out using temperature and time conditions such that the Larson-Miller parameter P is in the range of 10000-14000.

In another preferred embodiment the coated metal strip is made of martensite steel. Then heat treating the selected regions to be modified is carried out using temperature and time conditions such that the Larson-Miller parameter P is in the range of 13000-15000. In the case of martensite steel the tensile strength will decrease with annealing at P values 10000 and greater, but the strength is still relatively high, being greater than 780 MPa.

Studies have shown that when DP800 or DP1000 is heated such that P is greater than 10000, the mechanical properties change significantly, in particular bending and hole-expansion properties were improved. In fact the overall tensile response is very much like a complex-phase steel with a high yield ratio (Rp/Rm) which is optimised for bending and hole-expansion as opposed to stretch-forming. Although heat treating at a P value above 14000 increases total elongation and other formability parameters, especially Erichsen-cupping at the expense of yield and ultimate strength, the appearance and functionality of the Zn coating are seriously deteriorated.

For martensite the optimal P parameter range is 13000 to 15000. As for DP, higher P results in greater total elongation and Erichsen cupping index, but at too great expense to loss in yield and ultimate strength.

Advantageously, the Larson-Miller parameter P is less than 9500, more advantageously less than 9000 in the selected regions not to be modified.

The size and distribution of the heat-treated regions and the processing cycles utilised can be tailored for different products upon request of the customer.

The method according to the invention results in a product having at least two regions of different mechanical property sets. That is, an unmodified region still has its original DP or martensite steel properties with a low yield-strength ratio of <0.8. These original DP property sets are optimised for stretching and deep drawing forming operations for their strength level. A region heat-treated according to the invention shows a behaviour more like complex-phase (CP) steels, which has a different set of mechanical properties of high yield-strength ratio and a slightly lower ductility compared with a DP or martensite steel of the same strength level. However, steel grades with the CP-like tensile properties have superior bendability, edge-cracking resistance and hole-expansion compared to DP steel of the same strength level. This is also the case for martensite steels, but the ultimate tensile strength may be slightly reduced by about 10% relative percent.

The product could be sold and delivered to the customer as either rolls, cut plates or stamped blanks. One target application is blanks for components in the body-in-white automotive industry, where different properties are required in different parts of the blank for forming operations, or in the final component itself for performance (e.g. crash).

According to a second aspect of the invention a coated steel strip is provided having mechanical properties that differ over the width of the strip. The preferred embodiments presented above in view of the method according to the invention are similarly applicable to the second aspect of the invention.

The invention is further illustrated in the drawing, wherein:
Fig. 1 shows a basic layout of an embodiment of a process according to the invention;
Fig. 2 diagrammatically shows other embodiments of a product according to the invention;
Fig. 3 is a graph of temperature versus time as process conditions for DP steel for the method according to the invention; and
Fig. 4 is a series of graphs that show the development of tensile strength, yield strength, hole-expansion coefficient and bendability plotted against the Larson-Miller Parameter (LMP) for tempered galvanised DP800 steel.
Fig. 5 is a series of graphs that show the development of tensile strength, yield strength, hole-expansion coefficient and Erichsen Cupping Index plotted against the Larson-Miller Parameter (LMP) for tempered galvanised martensitic steel with initial tensile strength of 1450 MPa.

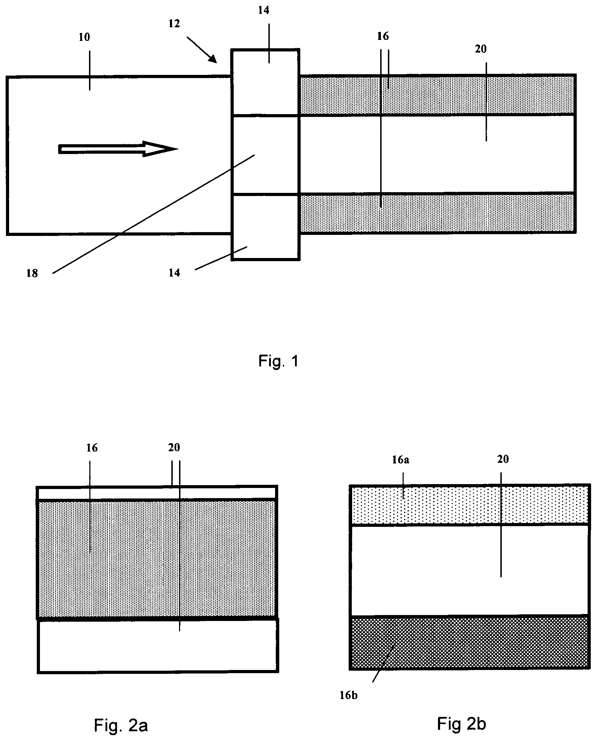

In fig. 1 a coated metal strip 10, directly derived from a hot dip galvanizing station (not shown), is moved through a temperature treatment station 12 for performing localized heat treatment of the metal strip 10. The station 12 is positioned over the strip 10 perpendicular to the motion direction (indicated by an arrow). In this example the station 12 is provided with induction heating elements 14, which are positioned along the longitudinal edges of the moving strip 10. The heating elements 14 establish locally heat treated edge regions 16 extending in the longitudinal direction of the strip. In the centre a cooling element 18 is provided for active cooling of the centre region 20 of the metal strip 10. Upon leaving the station 12 the metal strip thus treated is allowed to cool down naturally. Due to the heat treatment the edge regions 16 have modified properties differing from the original properties of the centre region 20.

Fig. 2 shows two additional lay outs of a heat treated coated metal strip according to the invention. Parts similar to fig. 1 are indicated by the same reference numerals. Fig. 2a shows a metal strip 10 having a centre region 16 that has been heat treated according to the invention and consequently the centre region 16 has other properties than the non-modified edge regions 20. Fig. 2b is comparable to the strip 10 shown in Fig. 1, except that the unmodified strip region 20 is not symmetrical relative to the centre longitudinal axis 22 of the strip 10. In other words the width of the upper edge region 16a differs from the width of the lower edge region 16b. The final properties of the upper edge region 16a could be different from the lower edge region 16b depending on the treatment conditions applied, as illustrated by the different density of the pattern.

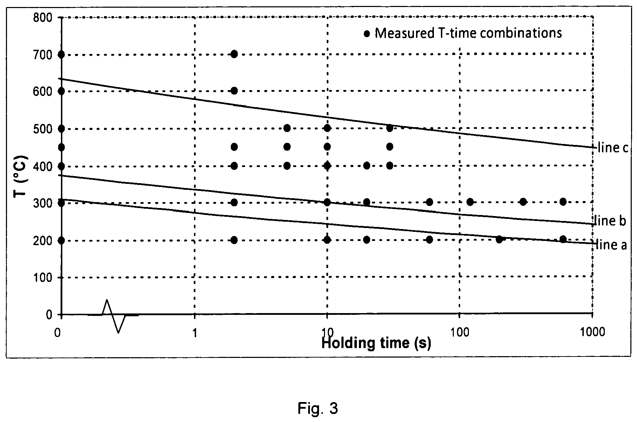

Fig. 3 shows a plot of temperature (Y-axis) versus time (X-axis) for coated DP steel, also representing lines a, b and c of constant Larson-Miller parameter (LMP) and measured T, t combinations represented by ●. The t window is limited to a practical range. At times t (including heating time from critical temperature to treatment (top) temperature, holding time above critical temperature and cooling time to temperature lower than critical temperature) lower than 1 second the treatment period is usually too short to result in sufficient change of the original mechanical properties. Periods of time t => 1000 seconds are not practical in view of incorporation in or association to a coating line and are very expensive in view of equipment. Below line a (LMP=9000), given the combination of time and temperature no change of the original properties occurs. Between line a and line b (LMP=10000) there is a transition area, wherein intended modifications of the properties start to occur. Between lines b and c there is an optimal region for modifying DP properties to CP properties. Above line c (LMP=14000) higher formability is achieved but at the expense of strength, resulting in unacceptable total modifications.

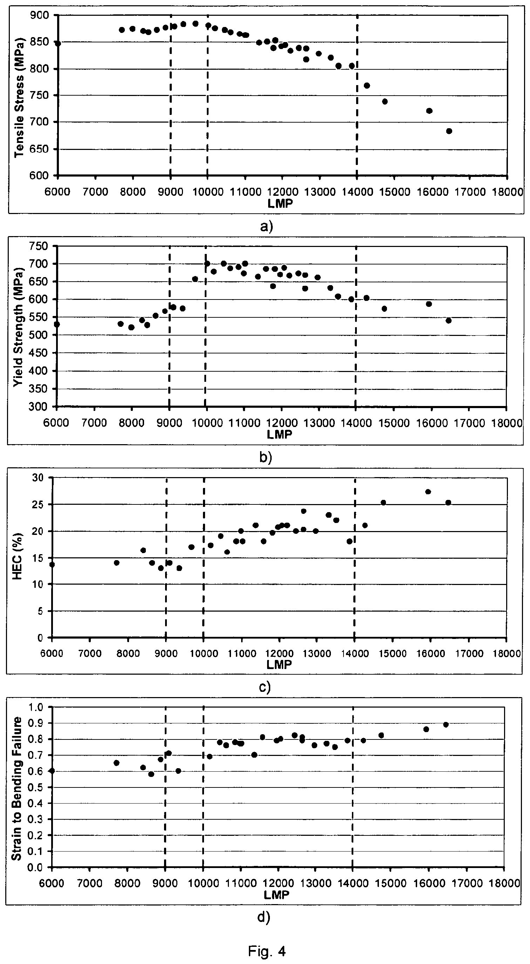

Fig. 4 show the development of mechanical properties with tempering temperature-time described by the Larson-Miller parameter (LMP) for a galvanised DP800 steel grade. Figs. 4a, b, c and d show tensile strength, yield strength, hole-expansion coefficient (HEC) and bendability respectively.

Tensile and bending properties were tested in the direction perpendicular to the rolling direction of the strip. The vertical dashed lines correspond to the LMP values of 9000, 10000 and 14000 that correspond to lines a, b and c in Fig. 3.

The materials tested were strips having a thickness of 1.6 mm. The strips were coated with a Zn coating that was 10 µm thick. They were produced on a commercial continuous annealing and galvanising line. The mechanical properties were assessed from strip sections of 600 mm x 150 mm. The strip sections were heated in a continuous annealing simulator. The heating rate was 35 °C/min and the cooling rate was 26 °C/min. In between the heating and cooling stages, experiments were conducted with and without a holding time period at constant temperature. The mechanical tests were conducted on regions of the strip that were homogeneous in temperature.

The initial properties for the tempered galvanised DP800 steel are the data points lying on the Y-axis in Fig. 4a)-d). For LMP values of 9000 and below, the changes in the mechanical properties are insignificant. Between LMP = 9000 and LMP = 10000 there is a slight increase in yield strength. With increasing LMP values the tensile strength steadily decreases and falls off sharply beyond LMP values of 14000. Yield strength remains stable up to LMP 13000 and then begins to decrease for greater LMP values. HEC steadily increases with increasing LMP above 10000. Bendability remains constant after the initial increase that occurred at LMP of about 10000, but after LMP of 14000 it begins to increase again.

Galvanised DP1000 strip was similarly heat treated and mechanically tested. The results were very similar in the regions of unchanged, transitional and significantly improved formability properties corresponding to essentially the same LMP ranges.

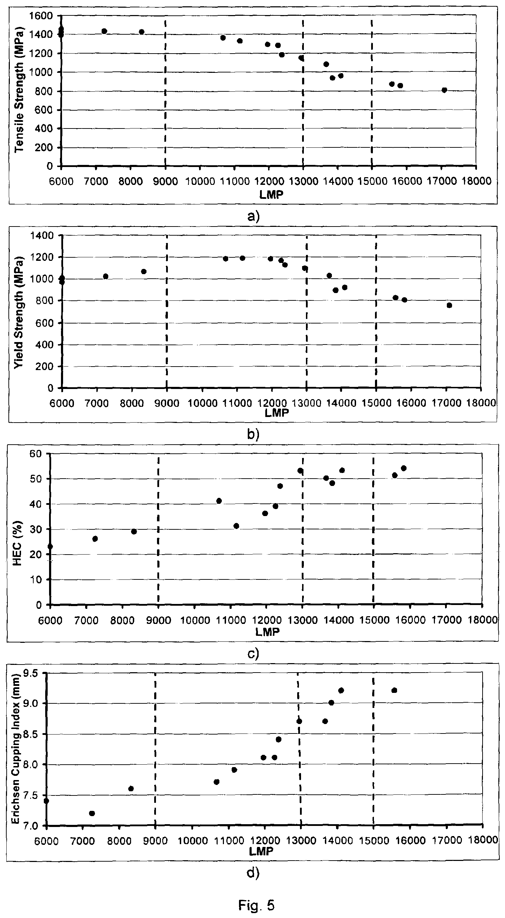

Fig. 5 show the development of mechanical properties with tempering temperature-time described by the Larson-Miller parameter (LMP) for a martensitic steel grade. Figs. 5a, b, c and d show tensile strength, yield strength, hole-expansion coefficient (HEC) and Erichsen Cupping Index respectively.

Tensile and bending properties were tested in the direction perpendicular to the rolling direction of the strip. The vertical dashed lines correspond to the LMP values of 9000, 10000 and 15000.

The materials tested were strips having a thickness of 1.5 mm. They were produced on a laboratory continuous annealing line simulator. The mechanical properties were assessed from strip sections of 600 mm x 150 mm. The strip sections were heated in a continuous annealing simulator. The heating rate was 35 °C/min and the cooling rate was 26 °C/min. In between the heating and cooling stages, experiments were conducted with and without a holding time period at constant temperature. The mechanical tests were conducted on regions of the strip that were homogeneous in temperature.

The initial properties for the tempered martensitic steel are the data points lying on the Y-axis in Fig. 5a)-d). For LMP values of 9000 and below, the changes in the mechanical properties are insignificant. Between LMP = 9000 and LMP = 11000 there is an increase in yield strength. With increasing LMP values the tensile strength steadily decreases beyond LMP values of 9000. Yield strength remains stable up to LMP 13000 and then begins to decrease for greater LMP values. HEC steadily increases with increasing LMP above 10000 and levels out after LMP values of 13000. Erichsen Cupping Index behaves similarly to that of HEC and bendability (not shown).

## Claims

1. Method of heat treating a coated metal strip (10) comprising the step of heat treating the coated metal strip (10) using heat treatment conditions which differ over the width of the coated metal strip (10), thereby providing mechanical properties that differ over the width of the strip (10), wherein the coated metal strip is a coated steel strip of dual phase (DP) steel or martensite steel, wherein heat treating comprises heating one or more selected regions (16) to be modified of the coated metal strip (10) above a critical temperature, while one or more selected regions (20) not to be modified are maintained below the critical temperature, wherein the temperature in the selected regions (20) not to be modified is kept below 250 °C, and wherein the selected regions (16; 20) run over the full length and parallel to the longitudinal axis of the coated metal strip (10), wherein one or more selected regions (16) to be modified of the coated metal strip (10) are heated to a treatment temperature ranging from 300 to 450 °C.

2. Method according to claim 1, wherein the dual phase (DP) steel is DP steel having ultimate tensile strength of 780 MPa or more.

3. Method according to any one of the preceding claims, wherein the coated metal strip (10) comprises a metal coating, preferably a zinc coating.

4. Method according to any one of the preceding claims, wherein one or more selected regions (16) to be modified of the coated metal strip (10) are heated to a treatment temperature ranging from 300 to 420 °C.

5. Method according to claim 4, wherein the one or more selected regions (16) to be modified of the coated metal strip (10) are maintained at the treatment temperature during a treatment period of time of at most 2 minutes, preferably less than 1 minute.

6. Method according to any one of the preceding claims, wherein the metal of the coated metal strip (10) is DP steel and heat treating the selected regions (16) to be modified is carried out using temperature and time conditions such that the Larson-Miller parameter P is in the range of 10000-14000, wherein P=T*(A+log(t)), T is the treating temperature (K), t is the time (hrs) and A is a constant factor of 22 plus or minus 2.

7. Method according to any one of the preceding claims 1-5, wherein the metal of the coated metal strip (10) is martensite steel and heat treating the selected regions (16) to be modified is carried out using temperature and time conditions such that the Larson-Miller parameter P is in the range of 13000-15000, wherein P=T*(A+log(t)), T is the treating temperature (K), t is the time (hrs) and A is a constant factor of 22 plus or minus 2.

8. Method according to any one of the preceding claims, wherein the temperature in the selected regions (20) not to be modified is kept below 200 °C.

9. Method according to any one of the preceding claims, wherein heat treating the selected regions (20) not to be modified is carried out using temperature and time conditions such that the Larson-Miller parameter P is less than 9000, wherein P=T*(A+log(t)), T is the treating temperature (K), t is the time (hrs) and A is a constant factor of 22 plus or minus 2.

10. Method according to any one of the preceding claims, wherein the width of a transition area between a region (16) to be modified and a region (20) not to be modified is controlled by forced cooling.

11. Method according to any one of the preceding claims, wherein the heat treatment is performed continuously on a moving coated metal strip (10), wherein preferably the line speed of the moving coated metal strip (10) is in the range of 0.5-150 metres per minute.

12. Coated metal strip (10) having mechanical properties that differ over the width of the strip produced in accordance with any one of the preceding claims, wherein the metal of the coated metal strip (10) is a strip of dual phase steel or martensite steel.

13. Coated metal strip according to claim 12, wherein the coated metal strip (10) has a metal coating, preferably a zinc coating.

## Patentansprüche

1. Verfahren zum Wärmebehandeln eines beschichteten Metallstreifens (10), das den Schritt des Wärmebehandelns des beschichteten Metallstreifens (10) durch Verwenden von Wärmebehandlungsbedingungen umfasst, die sich über der Breite des beschichteten Metallstreifens (10) unterscheiden, wodurch mechanische Eigenschaften bereitgestellt werden, die sich über der Breite des Streifens (10) unterscheiden, wobei der beschichtete Metallstreifen ein beschichteter Stahlstreifen aus Dualphasen-Stahl (DP) oder Martensit-Stahl ist, wobei das Wärmebehandeln ein Heizen eines oder mehrerer ausgewählter zu modifizierender Bereiche (16) des beschichteten Metallstreifens (10) über eine kritische Temperatur umfasst, während ein oder mehrere ausgewählte nicht zu modifizierende Bereiche (20) unterhalb der kritischen Temperatur gehalten werden, wobei die Temperatur in den ausgewählten nicht zu modifizierenden Bereichen (20) unterhalb 250 °C gehalten wird, und wobei sich die ausgewählten Bereiche (16; 20) über die vollständige Länge und parallel zu der Längsachse des beschichteten Metallstreifens (10) erstrecken, wobei ein oder mehrere ausgewählte zu modifizierende Bereiche (16) des beschichteten Metallstreifens (10) auf eine Behandlungstemperatur erwärmt werden, die sich von 300 bis 450 °C bewegt.

2. Verfahren nach Anspruch 1, wobei der Dualphasen-Stahl (DP) ein DP-Stahl mit Höchstzugfestigkeit von 780 MPa oder mehr ist.

3. Verfahren nach einem der vorhergehenden Ansprüche, wobei der beschichtete Metallstreifen (10) eine Metallbeschichtung umfasst, vorzugsweise eine Zinkbeschichtung.

4. Verfahren gemäß einem der vorhergehenden Ansprüche, wobei ein oder mehrere ausgewählte zu modifizierende Bereiche (16) des beschichteten Metallstreifens (10) auf eine Behandlungstemperatur erwärmt werden, die sich von 300 bis 420 °C bewegt.

5. Verfahren nach Anspruch 4, wobei der eine oder die mehreren ausgewählten zu modifizierenden Bereiche (16) des beschichteten Metallstreifens (10) während einer Behandlungsdauer von maximal 2 Minuten, vorzugsweise weniger als 1 Minute, auf der Behandlungstemperatur gehalten werden.

6. Verfahren nach einem der vorhergehenden Ansprüche, wobei das Metall des beschichteten Metallstreifens (10) DP-Stahl ist und Wärmebehandeln der ausgewählten zu modifizierenden Bereiche (16) durch Verwenden von Temperatur- und Zeitbedingungen so ausgeführt wird, dass der Larson-Miller-Parameter P in dem Bereich von 10.000 bis 14.000 liegt, wobei P = T * (A + log (t)) ist, T die Behandlungstemperatur (K) ist, t die Zeit (Std) ist und A ein konstanter Faktor von 22 plus oder minus 2 ist.

7. Verfahren nach einem der vorhergehenden Ansprüche 1 bis 5, wobei das Metall des beschichteten Metallstreifens (10) Martensit-Stahl ist und Wärmebehandeln der ausgewählten zu modifizierenden Bereiche (16) durch Verwenden von Temperatur- und Zeitbedingungen so ausgeführt wird, dass der Larson-Miller-Parameter P in dem Bereich von 13.000 bis 15.000 liegt, wobei P = T * (A + log (t)) ist, T die Behandlungstemperatur (K) ist, t die Zeit (Std) ist und A ein konstanter Faktor von 22 plus oder minus 2 ist.

8. Verfahren nach einem der vorhergehenden Ansprüche, wobei die Temperatur in den ausgewählten nicht zu modifizierenden Bereichen (20) unterhalb 200 °C gehalten wird.

9. Verfahren nach einem der vorhergehenden Ansprüche, wobei Wärmebehandeln der ausgewählten nicht zu modifizierenden Bereiche (20) durch Verwenden von Temperatur- und Zeitbedingungen so ausgeführt wird, dass der Larson-Miller-Parameter P geringer als 9.000 ist, wobei P = T * (A + log (t)) ist, T die Behandlungstemperatur (K) ist, t die Zeit (Std) ist und A ein konstanter Faktor von 22 plus oder minus 2 ist.

10. Verfahren nach einem der vorhergehenden Ansprüche, wobei die Breite eines Übergangsbereichs zwischen einem zu modifizierenden Bereich (16) und einem nicht zu modifizierenden Bereich (20) durch Zwangskühlen gesteuert wird.

11. Verfahren nach einem der vorhergehenden Ansprüche, wobei die Wärmebehandlung kontinuierlich auf einem sich bewegenden beschichteten Metallstreifen (10) ausgeführt wird, wobei die Transportgeschwindigkeit des sich bewegenden beschichteten Metallstreifens (10) vorzugsweise in dem Bereich von 0,5 bis 150 Meter pro Minute liegt.

12. Beschichteter Metallstreifen (10) mit mechanischen Eigenschaften, die sich nach einem der vorhergehenden Ansprüche über der Breite des erzeugten Streifens unterscheiden, wobei das Metall des beschichteten Metallstreifens (10) ein Streifen aus Dualphasen-Stahl oder Martensit-Stahl ist.

13. Beschichteter Metallstreifen nach Anspruch 12, wobei der beschichtete Metallstreifen (10) eine Metallbeschichtung hat, vorzugsweise eine Zinkbeschichtung.

## Revendications

1. Procédé permettant le traitement thermique d'une bande métallique revêtue (10) comprenant l'étape de traitement thermique de la bande métallique revêtue (10) dans des conditions de traitement thermique qui diffèrent sur la largeur de la bande métallique revêtue (10), ce qui permet d'obtenir des propriétés mécaniques qui diffèrent sur la largeur de la bande (10), la bande métallique revêtue étant une bande d'acier revêtue constituée d'acier biphasé (DP) ou d'acier martensitique, ledit traitement thermique comprenant le chauffage d'une ou plusieurs zones sélectionnées (16) à modifier de la bande métallique revêtue (10) au-dessus d'une température critique, pendant qu'une ou plusieurs zones sélectionnées (20) à ne pas modifier sont maintenues en-dessous de la température critique, la température dans les zones sélectionnées (20) à ne pas modifier étant maintenue en-dessous de 250°C, et lesdites zones sélectionnées (16 ; 20) couvrant la longueur entière et étant parallèle à l'axe longitudinal de la bande métallique revêtue (10), lesdites une ou plusieurs zones sélectionnées (16) à modifier de la bande métallique revêtue (10) étant chauffées à une température de traitement allant de 300 à 450°C.

2. Procédé selon la revendication 1, ledit acier biphasé (DP) étant un acier DP possédant une résistance à la traction supérieure ou égale à 780 MPa.

3. Procédé selon l'une quelconque des revendications précédentes, ladite bande métallique revêtue (10) comprenant un revêtement métallique, de préférence un revêtement en zinc.

4. Procédé selon l'une quelconque des revendications précédentes, lesdites une ou plusieurs zones sélectionnées (16) à modifier de la bande métallique revêtue (10) étant chauffées à une température de traitement allant de 300 à 420°C.

5. Procédé selon la revendication 4, lesdites une ou plusieurs zones sélectionnées (16) à modifier de la bande métallique revêtue (10) étant maintenues à la température de traitement durant une période de traitement d'une durée de 2 minutes tout au plus, de préférence inférieure à 1 minute.

6. Procédé selon l'une quelconque des revendications précédentes, ledit métal de la bande métallique revêtue (10) étant un acier DP et le traitement thermique des zones sélectionnées (16) à modifier étant effectué dans des conditions de température et de temps telles que le paramètre P de Larson-Miller est compris dans la plage allant de 10 000 à 14 000, où P=T*(A+log(t)), T étant la température de traitement (K), t étant le temps (h) et A étant un facteur constant de 22 plus ou moins 2.

7. Procédé selon l'une quelconque des revendications précédentes 1 à 5, ledit métal de la bande métallique revêtue (10) étant un acier martensitique et le traitement thermique des zones sélectionnées (16) à modifier étant effectué dans des conditions de température et de temps telles que le paramètre P de Larson-Miller est compris dans la plage allant de 13 000 à 15 000, où P=T*(A+log(t)), T étant la température de traitement (K), t étant le temps (h) et A étant un facteur constant de 22 plus ou moins 2.

8. Procédé selon l'une quelconque des revendications précédentes, ladite température dans les zones sélectionnées (20) à ne pas modifier étant maintenue en-dessous 200°C.

9. Procédé selon l'une quelconque des revendications précédentes, ledit traitement thermique des zones sélectionnées (20) à ne pas modifier étant effectué dans des conditions de température et de temps telles que le paramètre P de Larson-Miller est inférieur à 9 000, où P=T*(A+log(t)), T étant la température de traitement (K), t étant le temps (h) et A étant un facteur constant de 22 plus ou moins 2.

10. Procédé selon l'une quelconque des revendications précédentes, ladite largeur d'une zone de transition entre une zone (16) à modifier et une zone (20) à ne pas modifier étant contrôlée par refroidissement forcé.

11. Procédé selon l'une quelconque des revendications précédentes, ledit traitement thermique étant effectué en continu sur une bande métallique revêtue (10) en mouvement, la vitesse linéaire de la bande métallique revêtue (10) étant de préférence comprise dans la plage allant de 0,5 à 150 mètres par minute.

12. Bande métallique revêtue (10) possédant des propriétés mécaniques qui diffèrent sur la largeur de la bande produite selon l'une quelconque des revendications précédentes, ledit métal de la bande métallique revêtue (10) étant une bande d'acier biphasé ou d'acier martensitique.

13. Bande métallique revêtue selon la revendication 12, ladite bande métallique revêtue (10) possédant un revêtement métallique, de préférence un revêtement en zinc.
